# EUROPEAN PATENT SPECIFICATION

(11) **EP 3 752 421 B1**
(45) Date of publication and mention of the grant of the patent: **30.08.2023**
(21) Application number: 18905696.3
(22) Date of filing: 12.02.2018
(51) Int. Cl.: B64F 5/00, B29C 70/30, B64C 1/00, B64C 9/02, B29C 70/68, B64C 3/00

(54) **LOAD-BEARING BEAM STRUCTURE AND A METHOD FOR MANUFACTURING THE STRUCTURE**
LASTTRAGENDE BALKENSTRUKTUR UND HERSTELLUNGSVERFAHREN FÜR DIE STRUKTUR
STRUCTURE DE POUTRE PORTEUSE ET PROCÉDÉ DE FABRICATION DE LA STRUCTURE

(43) Date of publication of application: 23.12.2020
(73) Proprietor: SAAB AB, 581 88 Linköping (SE)
(72) Inventor: RYDBOM, Anders, 583 32 Linköping (SE); LINDBÄCK, Jan-Erik, 587 29 Linköping (SE); PETERSON, Mikael, 582 24 Linköping (SE); KARLSSON, Håkan, 59591 Mjölby (SE); RING, Jakob, 587 50 Linköping (SE)
(74) Representative: Zacco Sweden AB
(86) International application number: PCT/SE2018/050127
(87) International publication number: WO 2019/156604

(56) References cited:
- EP-A1- 2 047 971
- US-A1- 2011 168 324
- US-A1- 2013 099 062
- US-A1- 2014 295 113
- US-A1- 2015 329 197

## Description

### TECHNICAL FIELD

The present invention relates to a method for manufacturing of a hollow load-bearing beam structure comprising fiber-reinforced composite material. The present invention also relates to the hollow load-bearing beam structure per se.

The present invention may concern the aircraft manufacturing industry and especially the manufacture of different types of air foil members, such as primary control members made of fiber-reinforced composite material.

### BACKGROUND

Current integral multispar structures or hollow load-bearing beam structures of fiber-reinforced composite material are often produced in one single curing operation, which provides a cost effective and weight efficient integral multispar structure that may be used as an aircraft air foil member having an upper and lower surface. Today, attachment members for mounting the air foil member to the wing or other aircraft parts may be bolted to the lower surface of the air foil member. This implies that the lower surface has to be provided with a mounting arrangement (e.g. holes and brackets), which in turn requires heavy and bulky reinforcement measures of the air foil member.

The attachment members of some air foil members (e.g. aircraft control members, such as flaps of high-lift systems) are subjected to high forces when the air foil members are in extracted position during take-off and landing. Trailing edge flaps are one type of aircraft control members of high-lift systems increasing the camber of the aircraft wing and increasing the effective wing area when extracted. The structure of the aircraft control member is thus designed to resist high forces. The trailing edge flaps provide increased take-off performance and permit steeper approach angles and lower landing speeds of the aircraft. For meeting the high load and force resistance requirements related to the design of current air foil members, the research and development experts of the aircraft manufacturing industry propose different designs of air foil members.

However, the aircraft control members of today are still heavy and involve labour intensive manufacture.

There have been several attempts over a long time for the aircraft manufacturing industry to develop and improve lighter aircraft control members in a cost-effective way.

US 9227722 discloses a flap support structure for an aircraft wing comprising a flap support beam having a generally U-shaped fairing. The support comprises a flap linkage that is directly connected to a lower surface of the flap. A rear linkage is also connected to the flap via a bracket extending from the lower surface of the flap.

US 2011/0168324 A1 describes the production of complex, integral fibre composite parts having a plurality of internal and undercut stiffening elements employing removable cores. A first plurality of laminated layers extends through a second plurality of laminated layers and protrudes outward therefrom, and a portion of the first plurality of laminated layers protrudes outward from the second plurality of laminated layers and forms an external first member configured for attachment of e.g. a control surface actuator.

US 2015/0329197 A1 describes an integral fibre composite parts having a plurality of a first plurality of laminated layers extending through a second plurality of laminated layers and protrudes outward therefrom, and a portion of the first plurality of laminated layers protrudes outward from the second plurality of laminated layers and forms an external first member configured for attachment of e.g. an aircraft crank element. >

### SUMMARY OF THE INVENTION

An object of the present disclosure is to provide a method for the manufacturing of a hollow load-bearing structure comprising fiber-reinforced composite material, which hollow load-bearing structure comprises at least one external first member configured to be coupled to an attachment member. An object is to provide a method which seeks to mitigate, alleviate, or eliminate one or more of the above-identified or other identified deficiencies in the art and disadvantages singly or in any combination.

An object is to provide a method for the manufacturing of a hollow load-bearing structure, which method promotes cost-effective and time saving manufacture.

An object is to provide a method for the manufacturing of a hollow load-bearing structure, which method promotes the manufacture of light aircraft control members, which have external first members. The external first members may be coupled to an aircraft wing.

An object is to provide a technology step-change for the design of current aircraft control members and/or other air foil members comprising external first members protruding from an upper surface and/or lower surface of the air foil member.

The above-mentioned object is obtained by a method for manufacturing of a hollow load-bearing beam structure comprising fiber-reinforced composite material; wherein the hollow load-bearing beam structure comprises a first plurality of laminated layers constituting a first beam formed by an interior forming tool, the hollow load-bearing beam structure further comprises a second plurality of laminated layers constituting a first outer skin; the method comprising: forming the first beam by means of the interior forming tool; forming the first outer skin by means of an exterior forming tool; whereby the first plurality of laminated layers extends through the second plurality of laminated layers and protrudes outward therefrom; characterized by; before the step of applying an airtight envelope around the hollow load-bearing beam structure and the first and second mandrel arrangement, the method comprises; positioning an external first member forming tool arrangement around the outward protruding first plurality of laminated layers for holding the outward protruding first plurality of laminated layers in position during a step of curing; wherein the external first member forming tool arrangement is positioned around complementary laminated layers of the second plurality of laminated layers, a portion of which is applied on the outward protruding first plurality of laminated layers; and curing the hollow load-bearing beam structure in one single curing step; and removing the interior and exterior forming tool from the hollow load-bearing beam structure.

Alternatively, the interior forming tool comprises a first mandrel arrangement and a second mandrel arrangement.

Alternatively, at least the first mandrel arrangement comprises a solid mandrel.

Alternatively, at least the first mandrel arrangement comprises a mandrel that is configured to be dissolved after use.

Alternatively, at least the first mandrel arrangement comprises an inflatable mandrel, e.g. a bladder mould arrangement configured for resin injection application provided for forming the hollow load-bearing beam structure.

Alternatively, the exterior forming tool comprises an exterior tool arrangement that is configured to form the first outer skin and a second outer skin and to form at least one external first member.

Alternatively, the exterior forming tool envelopes the entire hollow load-bearing beam structure for forming the hollow load-bearing beam structure including the forming of the at least one external first member.

Alternatively, the object is solved by method for the manufacturing of a hollow load-bearing beam structure comprising fiber-reinforced composite material; wherein the hollow load-bearing beam structure comprises a first plurality of laminated layers constituting a first beam formed between a first mandrel arrangement and a second mandrel arrangement, the hollow load-bearing beam structure further comprises a second plurality of laminated layers constituting a first outer skin, wherein the method comprising; positioning the first mandrel arrangement and the second mandrel arrangement adjacent to each other and forming the first plurality of laminated layers there between; forming the second plurality of laminated layers by means of the first mandrel arrangement; forming the second plurality of laminated layers by means of the second mandrel arrangement; whereby the first plurality of laminated layers extends through the second plurality of laminated layers and protrudes outward therefrom; curing the hollow load-bearing beam structure; and removing the first and the second mandrel arrangement from the hollow load-bearing beam structure.

Alternatively, this is obtained by a method for the manufacturing of a hollow load-bearing beam structure comprising fiber-reinforced composite material; wherein the hollow load-bearing beam structure comprises a first plurality of laminated layers constituting a first beam directly or indirectly formed between a first internal first beam shaping surface of a first mandrel arrangement and an opposite second internal first beam shaping surface of a second mandrel arrangement, the hollow load-bearing beam structure further comprises a second plurality of laminated layers constituting a first outer skin; wherein the method comprises; positioning the first mandrel arrangement and the second mandrel arrangement adjacent to each other and forming the first plurality of laminated layers there between; forming the second plurality of laminated layers directly or indirectly on a first outer first skin shaping surface of the first mandrel arrangement; forming the second plurality of laminated layers directly or indirectly on a second outer first skin shaping surface of the second mandrel arrangement; whereby the first plurality of laminated layers extends entirely, or with at least one section, through the second plurality of laminated layers and protrudes outward therefrom; curing the hollow load-bearing beam structure; and removing the first and the second mandrel arrangement from the hollow load-bearing beam structure.

Alternatively, a portion of the first beam comprises an internal first beam.

Alternatively, the portion of the first plurality of laminated layers protruding outward from the second plurality of laminated layers forms an external first member.

Alternatively, the internal first beam extends between the first outer skin and a second outer skin comprising a third plurality of laminated layers.

Alternatively, the first plurality of laminated layers, extending through the second plurality of laminated layers and protruding outward from the second plurality of laminated layers, presents an external first member that is configured to be coupled to an attachment member.

Alternatively, the first plurality of laminated layers extends through the third plurality of laminated layers and protrudes outward from the third plurality of laminated layers, and thereby presents an external protruding member.

Alternatively, the first plurality of laminated layers extends through both the second plurality of laminated layers and the third plurality of laminated layers and protrudes outward from the second plurality of laminated layers and also protrudes from the third plurality of laminated layers.

Alternatively, the second plurality of laminated layers entirely or partly constitutes a lower surface of an aircraft flap or other air foil member.

In such a way there is achieved that no subtractive manufacturing or machining has to be performed (drilling/boring/shaping) in the lower surface (or other outer surface of the airfoil) for accommodation of bolts or other fasteners for mounting an additional external member protruding from the surface. Such machining in the (airfoil) surface would also imply that additional reinforcement material must be added.

In such a way is achieved that the hollow load-bearing beam structure, comprising at least one external first member, can be made light and strong due to the fact that load paths are led from the outward protruding portion (external member) of the first plurality of laminated layers (some of which layers, or all layers, forming also the first internal beam) to the internal beams and laminates of the hollow load-bearing beam structure.

The method promotes that the hollow load-bearing beam structure can be made as one-piece air foil member and in one single curing step, which saves manufacturing costs.

Alternatively, the method further comprises; applying an airtight envelope around the hollow load-bearing beam structure and the first and second mandrel arrangement; and evacuating air from the airtight envelope for holding the first and second plurality of laminated layers in position during the step of curing.

Alternatively, the external first member may comprise, apart from comprising the outward protruding first plurality of laminated layers, the complementary laminated layers of a portion of the second plurality of laminated layers.

Alternatively, the method further comprises machining a portion of the cured first plurality of laminated layers protruding outward from the second plurality of laminated layers, for removing excess material of the first plurality of laminated layers and leaving out the cured first plurality of laminated layers protruding outward from the second plurality of laminated layers in a well-defined second section for forming an external first member.

Alternatively, the method does not comprises any machining of the cured first plurality of laminated layers protruding outward from the second plurality of laminated layers, wherein the cured first plurality of laminated layers protruding outward from the second plurality of laminated layers is maintained in a first section for forming an elongated, external first member.

Alternatively, the first plurality of laminated layers protruding outward from the second plurality of laminated layers may be positioned and formed in such way that it presents a well-defined second section of the external first member.

Alternatively, the method further comprises; applying an attachment member to the first plurality of laminated layers, protruding outward from the second plurality of laminated layers.

Alternatively, the attachment member is configured as a hinge bracket and attachment member or any suitable attachment member.

Alternatively, the attachment member is configured to be coupled to e.g. a wing of an aircraft.

A hollow load-bearing beam structure comprising fiber-reinforced composite material, the hollow load-bearing beam structure comprises a first plurality of laminated layers of an internal first beam extending to a second plurality of laminated layers of an outer first skin of the hollow load-bearing beam structure, wherein the first plurality of laminated layers extends through the second plurality of laminated layers and protrudes outward therefrom.

Alternatively, the first plurality of laminated layers entirely extends or in at least one section extends through the second plurality of laminated layers and protrudes outward therefrom.

Alternatively, the first plurality of laminated layers separates the second plurality of laminated layers into a first group and a second group of the second plurality of laminated layers and protruding outward therefrom.

Alternatively, a portion of the first plurality of laminated layers extending entirely or in at least one section through the second plurality of laminated layers and protruding outward (alternatively together with some complementary laminated layers of the second plurality of laminated layers) from the second plurality of laminated layers, constitutes an external first member.

Alternatively, the external first member protrudes outward from the majority of laminated layers of the second plurality of laminated layers forming a lower surface of the hollow load-bearing beam structure.

Alternatively, the first plurality of laminated layers extending entirely or in at least one section through the second plurality of laminated layers is added with complementary laminated layers of the second plurality of laminated layers.

In such a way is achieved that some of the internal beams (e.g. the internal first beam and an internal second beam of the hollow load-bearing beam structure) protrude from the lower surface. This results in a very cost- and weight efficient one-cure integral multispar structure, which can carry and take care of vertical loads (e.g. seen in a direction normal to the extension of the lower surface) arising from the external first member and transferred to the internal beams (spars) of the structure.

Alternatively, the first plurality of laminated layers extends to a third plurality of laminated layers of an outer second skin of the hollow load-bearing beam structure.

Alternatively, the hollow load-bearing beam structure comprises a fourth plurality of laminated layers of a second beam extending entirely or in at least one section through the second plurality of laminated layers.

Alternatively, a portion of the second beam comprises an internal second beam.

Alternatively, the fourth plurality of laminated layers separates the second plurality of laminated layers into the second group and a third group of the second plurality of laminated layers and protruding outward therefrom.

Alternatively, the fourth plurality of laminated layers extending entirely or in at least one section through the second plurality of laminated layers is added with complementary laminated layers of the second plurality of laminated layers.

Alternatively, a portion of the fourth plurality of laminated layers extending entirely or in at least one section through the second plurality of laminated layers and protruding outward (alternatively together with some complementary laminated layers of a portion of the second plurality of laminated layers) from the second plurality of laminated layers, constitutes an external second member.

Alternatively, the external first member protrudes outward from the major portion of laminated layers of the second plurality of laminated layers forming a lower surface of the hollow load-bearing beam structure.

Alternatively, before the step of applying an airtight envelope around the hollow load-bearing beam structure and the first and second mandrel arrangement, the method may comprise the step of positioning an external second member forming tool arrangement around the outward protruding fourth plurality of laminated layers for holding the outward protruding fourth plurality of laminated layers in position during the step of curing.

Alternatively, the method may comprise the step of positioning the external second member forming tool arrangement around the outward protruding fourth plurality of laminated layers and some complementary laminated layers of the second plurality of laminated layers.

Alternatively, the external second member may comprise, apart from comprising the outward protruding fourth plurality of laminated layers, a portion of the complementary laminated layers of the second plurality of laminated layers.

Alternatively, the external first member forming tool arrangement and the external second member forming tool arrangement may be coupled to the first and second mandrel arrangement.

Alternatively, the internal first beam, the internal second beam, the outer first skin and the outer second skin are configured as structural portions of an integral multispar structure.

Alternatively, the internal first beam, the internal second beam, the outer first skin and the outer second skin are made in polymeric material.

Alternatively, the polymeric material comprises a thermosetting polymer.

Alternatively, the thermosetting polymer comprises pre-impregnated fiber layers.

Alternatively, the internal first beam is configured as a first continuous internal spar.

Alternatively, the internal second beam is configured as a second continuous internal spar.

Alternatively, the internal first beam comprises a portion of the first plurality of laminated layers extending entirely or in at least one section through the second plurality of laminated layers and protruding outward from the majority of laminated layers of the second plurality of laminated layers.

Alternatively, the internal second beam comprises a portion of the fourth plurality of laminated layers extending entirely or in at least one section through the second plurality of laminated layers and protruding outward from the majority of laminated layers of the second plurality of laminated layers.

Alternatively, the hollow load-bearing beam structure comprises at least three internal beams, each configured as a continuous internal spar.

Alternatively, a portion of the first plurality of laminated layers protruding outward from the second plurality of laminated layers is configured to be coupled to an attachment member.

Alternatively, a portion of the first plurality of laminated layers protruding outward from the second plurality of laminated layers, -wherein the portion also comprises complementary laminated layers that also are configured to form at least a portion of the second plurality of laminated layers forming the lower surface of the integral multispar structure-, is configured to be coupled to an attachment member.

Alternatively, the second plurality of laminated layers forming the lower surface of the hollow load-bearing beam structure (integral multispar structure) also forms at least one side surface of the outwardly protruding first plurality of laminated layers.

In such a way there is provided a cost effective manufacture of e.g. aircraft control members, such as flaps or others, comprising at least one external first member configured to be coupled to an attachment member.

In such a way there is provided that high forces on the at least one external first member efficiently and optimally can be led from the external first member into the hollow load-bearing beam structure via the at least one first internal beam extending through the lower surface and coupled to the lower surface.

By exposing a portion of the at least one first internal beam outside the hollow load-bearing beam structure or air foil member, the load paths can be led from the at least one external first member to the first and second plurality of laminated layers.

By means of the claimed features it is possible to cure the one-piece hollow load-bearing beam structure, comprising the at least one external first member, in one single curing operation.

In such a way there is achieved that continuous fibres of the plurality of laminated layers in all portions of the hollow load-bearing beam structure are provided for all internal load paths of the structure, especially in connection with the at least one external first member.

In such a way is achieved that high forces can be applied to the external attachment member affecting the hollow load-bearing beam structure), at the same time as the hollow load-bearing beam structure can be of low weight.

Alternatively, the hollow load-bearing beam structure partly or entirely constitutes an air foil member, e.g. an aircraft control member, such as a flap, a slot etc. or another aircraft control member such as an aileron, rudder, elevator or constitutes any other air foil member such as a nacelle, nose cone that preferably is made as an integral multispar structure.

Alternatively, the hollow load-bearing beam structure partly or entirely constitutes a flap or other high-lift device of an aircraft, wherein the second plurality of laminated layers forms a lower surface of the high-lift device or flap, which lower surface can be used for arranging an attachment member.

In such a way there is no need for penetrating the second plurality of laminated layers forming the lower surface with bolts or rivets or other fittings for mounting the attachment member.

In such a way there is no penetrating of the lower surface of the integral multispar structure, which penetrating (such as e.g. through-holes or bores) would cut of major load paths of the integral multispar structure, which in turn would imply that additional reinforcement material has to be added to the integral multispar structure.

Alternatively, a structural reinforcement coupling member, which in turn may be coupled to an attachment member, is arranged between the external first member and the external second member.

Alternatively, the external first member and the external second member are coupled to each other via a coupling member configured to reinforce the arrangement of the external first member and the external second member.

Alternatively, a fifth plurality of laminated layers of a third beam separates the second plurality of laminated layers protruding outward therefrom.

Alternatively, a sixth plurality of laminated layers of a fourth beam separates the second plurality of laminated layers protruding outward therefrom.

The above-mentioned object is obtained by an aircraft comprising the hollow load-bearing beam structure according to any of the accompanying claims.

In such a way is achieved an integral multispar structure that can be used as a flap (or other air foil member) of an aircraft, which flap is of low weight thus reducing the weight of the aircraft promoting energy-saving for mitigating climate change and reduce environmental impacts.

The interior forming tool may also be called an interior forming tool assembly.

### BRIEF DESCRIPTION OF THE DRAWINGS

The present invention will now be described by way of examples with references to the accompanying schematic drawings, of which:
Fig. 1 illustrates an aircraft comprising a first example of a hollow load-bearing beam structure;
Fig. 2 illustrates a flap arrangement comprising a second example of a hollow load-bearing beam structure;
Fig. 3 illustrates an air foil member according to a third example of a hollow load-bearing beam structure;
Fig. 4 illustrates an aircraft control member designed according to a fourth example of a hollow load-bearing beam structure;
Fig. 5 illustrates an aircraft control member designed according to a fifth example of a hollow load-bearing beam structure;
Fig. 6 illustrates a flap arrangement comprising a hollow load-bearing beam structure according to a sixth example;
Fig. 7 illustrates a flap arrangement comprising a hollow load-bearing beam structure according to a seventh example;
Fig. 8 illustrates a hollow load-bearing beam structure according to an eighth example of a hollow load-bearing beam structure;
Fig. 9 illustrates a portion of a hollow load-bearing beam structure according to a ninth example;
Fig. 10 illustrates a portion of a tool assembly configured to form a hollow load-bearing beam structure according to a tenth example;
Fig. 11 illustrates an eleventh example of a hollow load-bearing beam structure; and
Figs. 12-14 illustrate schematic block diagrams describing exemplary methods for manufacturing a hollow load-bearing beam structure.

### DETAILED DESCRIPTION

Hereinafter, examples of the present invention will be described in detail with reference to the accompanying drawings, wherein for the sake of clarity and understanding of the invention some details of no importance may be deleted from the drawings. Some details may have the same reference number but may relate to different examples.

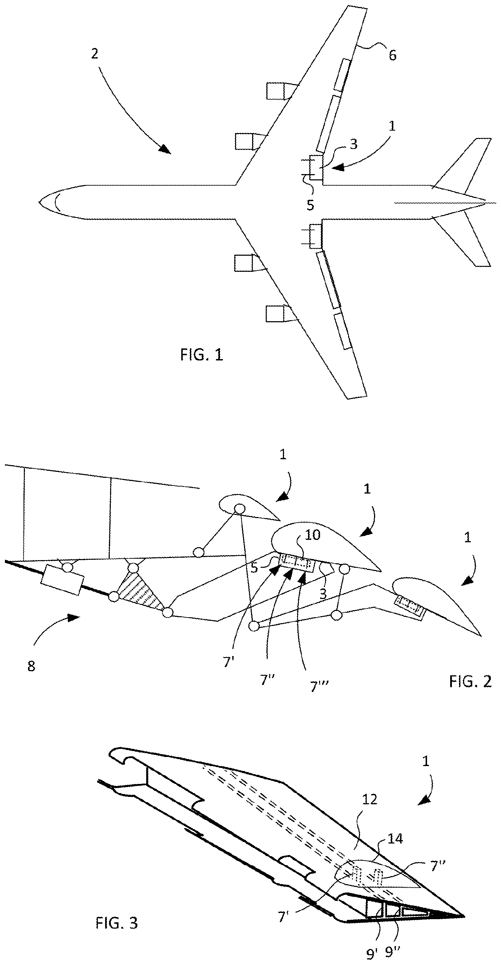

Fig. 1 illustrates an aircraft 2 comprising a first example of a hollow load-bearing beam structure 1. The hollow load-bearing beam structure 1 may be a flap comprising fiber-reinforced composite material. It may be made by stacking pre-impregnated fiber layup tapes onto each other (by hand and/or by an automatic tape layer machine or semiautomatic application). The following curing process may be performed in one step. The hollow load-bearing beam structure 1 comprises a first plurality of laminated layers of an internal first beam (not shown) extending to a second plurality of laminated layers of an outer first skin 3 of the hollow load-bearing beam structure 1. The first plurality of laminated layers further extends entirely or in at least one section through the second plurality of laminated layers and protrudes outward from the second plurality of laminated layers. The hollow load-bearing beam structure 1 is coupled to a wing 6 of the aircraft 2 via an attachment member 5. The attachment member 5 is mounted (e.g. bolted) to the outer first skin 3 via the first plurality of laminated layers protruding outward from the outer first skin 3 and may comprise a hinge arrangement (not shown), which is configured to provide that the hollow load-bearing beam structure 1 is hingedly coupled to the wing 6.

Fig. 2 illustrates a flap arrangement 8 comprising a second example of a hollow load-bearing beam structure 1. The hollow load-bearing beam structure 1 comprises laminated layers extending through an outer first skin 3 of the hollow load-bearing beam structure 1. An attachment member 5 is coupled to the outer first skin 3. An external first member 7', an external second member 7" and an external third member 7‴ extend from the outer first skin 3 and are extensions of a respective internal beam (not shown). The external first member 7', the external second member 7" and the external third member 7‴ are coupled to each other via a coupling member 10, which in turn is mounted to the attachment member 5. By exposing a portion of the respective internal beam outside the hollow load-bearing beam structure, load paths can be led from the external members 7', 7", 7‴ to the internal beams. This results in a very cost- and weight efficient one-cure manufacture providing an integral multispar structure with robust introductions of vertical loads from the attachment members to the internal spars of the structure.

Fig. 3 illustrates an air foil member according to a third example of a hollow load-bearing beam structure 1. An external first member 7' and an external second member 7" extend from an upper surface 12 of the hollow load-bearing beam structure 1 and are extensions of a first internal beam 9' and second internal beam 9" respectively through the upper surface 12. An attachment member (not shown) is coupled to the upper surface 12 via the external first member 7' and the external second member 7". A fairing 14 is mounted over the external first member 7' and the external second member 7" for reduction of drag.

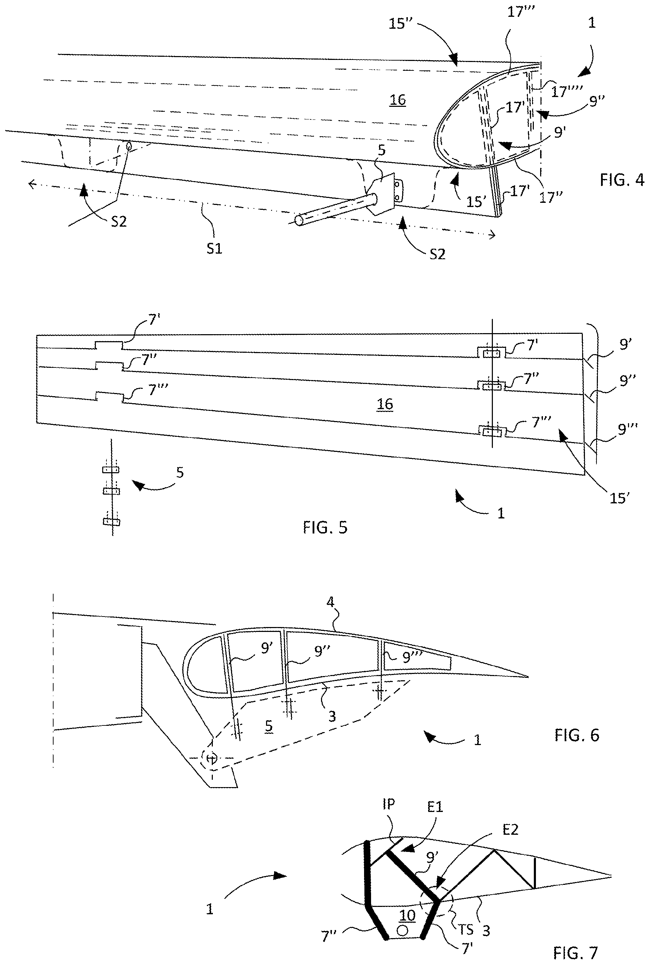

Fig. 4 illustrates a control member 16 designed according to a fourth example of a hollow load-bearing beam structure 1. The hollow load-bearing beam structure 1 is made of fiber-reinforced composite material and comprises an internal first beam 9' extending between a lower 15' and an upper skin 15" of fiber-reinforced composite material. The internal first beam 9' comprises a first plurality of laminated layers 17'. The first plurality of laminated layers 17' extends entirely in at least a first section S1 through the second plurality of laminated layers 17". The extension of the internal first beam 9' may extend through the second plurality of laminated layers 17" in a well-defined second section S2.

The first plurality of laminated layers 17' also may extend to a third plurality of laminated layers 17‴ of the upper skin 15". The hollow load-bearing beam structure 1 may comprise a fourth plurality of laminated layers 17"" of an internal second beam 9" extending entirely or limited in the at least one second section S2 and through the second plurality of laminated layers 17". The internal first beam 9', the internal second beam 9", the lower skin 15' and the upper skin 15" are configured as structural portions of the hollow load-bearing beam structure 1 (integral spar structure).

This structure promotes a very cost- and weight efficient one-cure manufacturing procedure of the hollow load-bearing beam structure 1 performing robust introduction of vertical loads from attachment members 5 mounted to the extended portions of the internal first beams 9' and of the internal second beams 9".

Fig. 5 illustrates a control member 16 designed according to a fifth example of a hollow load-bearing beam structure 1. A set of external first members 7', a set of external second members 7" and a set of external third members 7‴ form extensions of three internal beams 9', 9", 9‴ (spars) and extend from the lower skin 15'.

Each of the external first, second and third members 7', 7", 7‴ may comprise, -apart from comprising the outward protruding plurality of laminated layers of the internal beams 9', 9", 9‴-, complementary laminated layers of the lower skin 15'.

A respective attachment member 5 may be configured to be coupled to the outer first skin 3 via each set of the external first, second and third members 7', 7", 7'", each comprising a first plurality of laminated layers protruding outward from a majority of a second plurality of laminated layers forming the lower skin 15'.

Fig. 6 illustrates a flap arrangement comprising a hollow load-bearing beam structure 1 according to a sixth example. The hollow load-bearing beam structure 1 comprises an internal first beam 9', an internal second beam 9", an internal third beam 9‴, an outer first skin 3 and an outer second skin 4. The internal first beam 9', the internal second beam 9", the outer first skin 3 and the outer second skin 4 are configured as structural portions of an integral multispar structure. A portion of a first plurality of laminated layers (not shown) of the respective internal beam 9', 9", 9‴ protruding outward from a second plurality of laminated layers (not shown) of the outer first skin 3, is configured to be coupled to an external attachment member 5.

Fig. 7 illustrates a flap arrangement comprising a hollow load-bearing beam structure 1 according to a seventh example. The hollow load-bearing beam structure 1 comprises an internal first beam 9' that extends through an outer first skin 3 and that comprises an external first member 7' protruding in a direction outward from the outer first skin 3. A first end E1 of the internal first beam 9' is coupled to an internal spar IP and a second end E2 of the internal first beam 9' protrudes through the outer first skin 3 in a through section TS. The internal first beam 9' is made with a bending portion in the through section TS. The external first member 7' and the internal first beam 9' comprise a common first plurality of laminated layers (not shown in detail).

The bending portion in the through section TS is configured in such a way that fibre laminates of the first plurality of laminated layers (of the internal first beam 9' and the external first member 7') comprise continuous fibres. A structural reinforcement coupling member 10, which in turn is coupled to an attachment member (not shown), is arranged between the external first member 7' and an external second member 7".

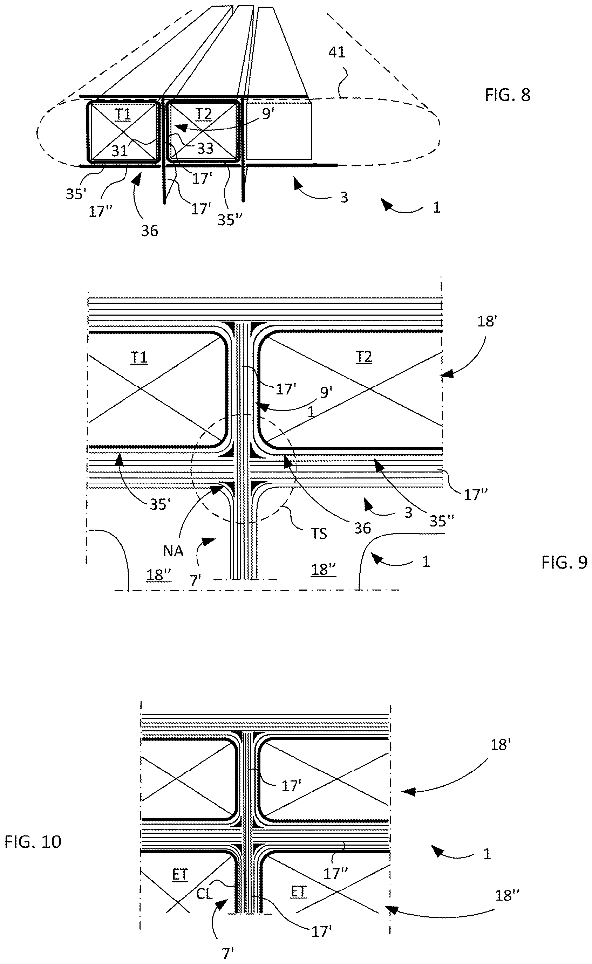

Fig. 8 illustrates a portion of a hollow load-bearing beam structure 1 according to an eighth example of a hollow load-bearing beam structure 1 made according to one manufacturing embodiment. The hollow load-bearing beam structure 1 comprises fiber-reinforced composite material (in similarity with the other examples given herein). The hollow load-bearing beam structure 1 comprises a first plurality of laminated layers 17'constituting a first beam 9'.

The first beam 9' is formed between a first internal first beam shaping surface 31 of a first mandrel arrangement T1 and an opposite second internal first beam shaping surface 33 of a second mandrel arrangement T2. The hollow load-bearing beam structure 1 further comprises a second plurality of laminated layers 17" constituting a first outer skin 3.

The second plurality of laminated layers 17" may be formed indirectly (i.e. formed on the first plurality of laminated layers 17' not constituting a portion of the first beam 9' but constituting a portion of the first outer skin 3 by application of the laminated layers around the first T1 and second T2 mandrel arrangement) on a first 35' and a second 35" outer first skin shaping surface constituting an outer first skin shaping surface arrangement 36 of the first and second mandrel arrangement T1, T2. The first plurality of laminated layers 17' extending entirely or with at least one portion through the second plurality of laminated layers 17" protrudes outward therefrom. The first mandrel arrangement T1 and the second mandrel arrangement T2 may comprise a solid mandrel arrangement, which may be made of metal or plastic. Before curing, an airtight envelope 41 may be arranged around the hollow load-bearing beam structure 1 and the first T1 and second T2 mandrel arrangement.

An interior forming tool arrangement may comprise a first mandrel arrangement and a second mandrel arrangement.

Fig. 9 illustrates a portion of a hollow load-bearing beam structure according to a ninth example comprising an outer first skin 3. A first plurality of laminated layers 17' may constitute a portion of a first beam 9' extending through a second plurality of laminated layers 17". A noodle arrangement NA of the same material as that of the first 17' and second 17" plurality of laminated layers may be positioned in a through section TS for achieving a continuous fibres transition of some of the second plurality of laminated layers 17" applied onto the first plurality of laminated layers 17' forming an external first member 7' protruding in a direction outward from the outer first skin 3. A first 35' and a second outer first skin shaping surface 35" constitute an outer first skin shaping surface arrangement 36 of the first and second mandrel arrangement T1, T2 of an interior forming tool arrangement 18'.

The first mandrel arrangement T1 and the second mandrel arrangement T2 may comprise a bladder mould arrangement configured for resin injection application provided for forming the hollow load-bearing beam structure 1.

Fig. 10 illustrates a portion of a tool assembly configured to form a hollow load-bearing beam structure 1 according to a tenth example. An interior forming tool 18' comprises a first mandrel arrangement and a second mandrel arrangement.

In this example the interior forming tool 18' may comprise at least the first mandrel arrangement comprising a mandrel that is configured to be dissolved after use.

Alternatively, the at least the first mandrel arrangement may comprise an inflatable mandrel, e.g. a bladder mould arrangement configured for resin injection application provided for forming the hollow load-bearing beam structure.

An exterior forming tool 18" surrounds the entire hollow load-bearing beam structure 1 (only a portion of which is shown) for forming the outer surfaces of the structure 1 and also the external first member 7'.

Alternatively, the exterior forming tool envelopes the entire hollow load-bearing beam structure 1 for forming the hollow load-bearing beam structure 1 including the forming of the at least one external first member 7'.

An external first member forming tool arrangement ET of the exterior forming tool 18" is positioned as separate or integral parts around the outward protruding first plurality of laminated layers 17' for holding the outward protruding first plurality of laminated layers 17' in position during the step of curing. The external first member forming tool arrangement ET may also be configured to shape complementary laminated layers of the second plurality of laminated layers forming the external first member 7'. The positioning of the external first member forming tool arrangement ET around the outward protruding first plurality of laminated layers 17' may thus include that the external first member forming tool arrangement ET also holds in position some complementary laminated layers CL of the second plurality of laminated layers 17" for forming an external first member 7'.

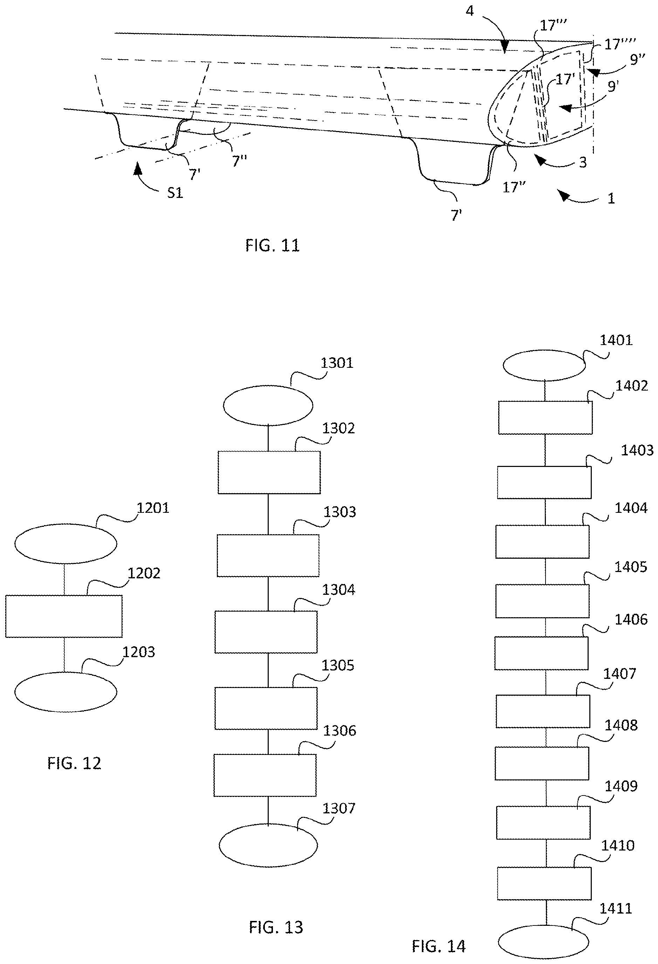

Fig. 11 illustrates an eleventh example of a hollow load-bearing beam structure 1 comprising fiber-reinforced composite material and comprising a first plurality of laminated layers 17' of an internal first beam 9' extending to a second plurality of laminated layers 17" of an outer first skin 3 of the hollow load-bearing beam structure 1. The first plurality of laminated layers 17' extends through the second plurality of laminated layers 17" and protrudes outward from the second plurality of laminated layers 17" in at least one first section S1 and forms an external first member 7'. The first plurality of laminated layers 17' may extend to a third plurality of laminated layers 17‴ of an outer second skin 4 of the hollow load-bearing beam structure 1. The hollow load-bearing beam structure 1 may comprise a fourth plurality of laminated layers 17"" of an internal second beam 9" extending through the second plurality of laminated layers 17" in the at least one section S1 and forms an external second member 7".

Figs. 12-14 illustrate schematic block diagrams describing exemplary methods for manufacturing a hollow load-bearing beam structure comprising fiber-reinforced composite material. The exemplary methods are performed for manufacturing a hollow load-bearing beam structure comprising a first plurality of laminated layers constituting a first beam directly or indirectly formed between a first internal first beam shaping surface of a first mandrel arrangement and an opposite second internal first beam shaping surface of a second mandrel arrangement, the hollow load-bearing beam structure further comprises a second plurality of laminated layers constituting a first outer skin.

The method shown in Fig. 12 comprises a first step 1201 for starting the exemplary method. A second step 1202 comprises steps for performing the method by positioning the first mandrel arrangement and the second mandrel arrangement adjacent to each other and forming the first plurality of laminated layers there between; forming the second plurality of laminated layers directly or indirectly on a first outer first skin shaping surface of the first mandrel arrangement; forming the second plurality of laminated layers directly or indirectly on a second outer first skin shaping surface of the second mandrel arrangement; whereby the first plurality of laminated layers extending entirely or with at least one section through the second plurality of laminated layers and protruding outward therefrom; curing the hollow load-bearing beam structure; and removing the first and the second mandrel arrangement from the hollow load-bearing beam structure. A third step 1203 regards the stop of the exemplary method.

The method shown in Fig. 13 comprises a first step 1301 for starting the exemplary method. A second step 1302 comprises positioning the first mandrel arrangement and the second mandrel arrangement adjacent to each other and forming the first plurality of laminated layers there between. A third step 1303 comprises forming the second plurality of laminated layers directly or indirectly on a first outer first skin shaping surface of the first mandrel arrangement. A fourth step 1304 comprises forming the second plurality of laminated layers directly or indirectly on a second outer first skin shaping surface of the second mandrel arrangement, whereby the first plurality of laminated layers extending entirely or with at least one section through the second plurality of laminated layers and protruding outward therefrom. A fifth step 1305 comprises curing the hollow load-bearing beam structure and a sixth step 1306 comprises removing the first and the second mandrel arrangement from the hollow load-bearing beam structure. A seventh step 1307 regards the stop of the exemplary method.

The method shown in Fig. 14 comprises a first step 1401 for starting the further exemplary method. A second step 1402 comprises positioning the first mandrel arrangement and the second mandrel arrangement adjacent to each other and forming the first plurality of laminated layers there between. A third step 1403 comprises forming the second plurality of laminated layers directly or indirectly on a first outer first skin shaping surface of the first mandrel arrangement. A fourth step 1404 comprises forming the second plurality of laminated layers directly or indirectly on a second outer first skin shaping surface of the second mandrel arrangement, whereby the first plurality of laminated layers extending entirely or with at least one section through the second plurality of laminated layers and protruding outward therefrom. A fifth step 1405 comprises curing the hollow load-bearing beam structure and a sixth step 1406 comprises removing the first and the second mandrel arrangement from the hollow load-bearing beam structure. A seventh step 1407 comprises applying an airtight envelope around the hollow load-bearing beam structure and the first and second mandrel arrangement. An eight step 1408 comprises evacuating air from the airtight envelope for holding the first and second plurality of laminated layers in position during the step of curing. A ninth step 1409 may comprise machining the cured first plurality of laminated layers protruding outward from the second plurality of laminated layers, for removing excess material from the first plurality of laminated layers. A tenth step 1410 may comprise applying an attachment member to the first plurality of laminated layers protruding outward from the second plurality of laminated layers. An eleventh step 1411 regards the stop of the exemplary method.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims.

The hollow load-bearing beam structure may form a primary control member or a secondary control member of an aircraft.

Preferably, the hollow load-bearing beam structure forms an aircraft control member, such as a trailing and leading edge flap, a slot, a spoiler, an airbrake etc. for meeting the influence of large forces affecting the hollow load-bearing beam structure via the external first member.

The number of external members of one single hollow load-bearing beam structure may vary. For example, a common flap may require two pair of external members for proving the fitting of two attachment member to the flap. The material of the hollow load-bearing beam structure may comprise polymeric matrix material, such as fiber reinforced epoxy. The entire load-bearing structure of the hollow load-bearing beam structure may comprise a polymeric matrix material and can be made in one curing step for providing a strong and light hollow load-bearing beam structure, which can be manufactured cost-effectively.

## Claims

1. A method for manufacturing of a hollow load-bearing beam structure (1) comprising fiber-reinforced composite material; wherein the hollow load-bearing beam structure (1) comprises a first plurality of laminated layers (17') constituting a first beam (9') formed by an interior forming tool (18'), the hollow load-bearing beam structure (1) further comprises a second plurality of laminated layers (17") constituting a first outer skin (3);
**the method comprising:**
- forming the first beam (9') by means of the interior forming tool (18');
- forming the first outer skin (3) by means of an exterior forming tool (18"); whereby the first plurality of laminated layers (17') extends through the second plurality of laminated layers (17") and protrudes outward therefrom; **characterized by;**
- before the step of applying an airtight envelope around the hollow load-bearing beam structure and the first and second mandrel arrangement, the method comprises;
- positioning an external first member forming tool arrangement (ET) around the outward protruding first plurality of laminated layers (17') for holding the outward protruding first plurality of laminated layers (17') in position during a step of curing; wherein the external first member forming tool arrangement (ET) is positioned around complementary laminated layers (CL) of the second plurality of laminated layers (17"), a portion of which is applied on the outward protruding first plurality of laminated layers (17'); and
- curing the hollow load-bearing beam structure (1) in one single curing step; and
- removing the interior and exterior forming tool (18', 18") from the hollow load-bearing beam structure (1).

2. The method according to claim 1, **wherein** the interior forming tool (18') comprises first and second mandrel arrangement (T1, T2).

3. The method according to claim 1 or 2, **wherein** the method further comprises:
- applying an airtight envelope (41) around the hollow load-bearing beam structure;
- evacuating air from the airtight envelope (41) for holding the first and second plurality of laminated layers (17', 17") in position during the step of curing.

4. The method according to any of claim 1 to 3, **wherein** the method further comprises:
- machining the cured first plurality of laminated layers (17') protruding outward from the second plurality of laminated layers (17"), wherein a portion of the cured first plurality of laminated layers (17') is maintained in a first section (S1) for forming an external first member (7').

5. The method according to any of the preceding claims, **wherein** the method further comprises:
- applying an attachment member (5) to the first plurality of laminated layers (17'), protruding outward from the second plurality of laminated layers (17").

## Patentansprüche

1. Verfahren zum Herstellen einer hohlen lasttragenden Balkenstruktur (1), die faserverstärktes Verbundmaterial umfasst; wobei die hohle lasttragende Balkenstruktur (1) eine erste Vielzahl von laminierten Schichten (17') umfasst, die einen ersten Balken (9') bildet, der durch ein inneres Formwerkzeug (18') gebildet ist, wobei die hohle lasttragende Balkenstruktur (1) ferner eine zweite Vielzahl von laminierten Schichten (17") umfasst, die eine erste Außenhaut (3) bildet;
wobei das Verfahren Folgendes umfasst:
- Bilden des ersten Balkens (9') mit dem inneren Formwerkzeug (18');
- Bilden der ersten Außenhaut (3) mittels eines äußeren Formwerkzeugs (18");
wobei sich die erste Vielzahl von laminierten Schichten (17') durch die zweite Vielzahl von laminierten Schichten (17") erstreckt und von dieser nach außen vorsteht; **dadurch gekennzeichnet, dass**
- das Verfahren vor dem Schritt eines Aufbringens einer luftdichten Hülle um die hohle lasttragende Balkenstruktur und die erste und zweite Dornanordnung Folgendes umfasst:
- Positionieren einer äußeren ersten Elementformwerkzeuganordnung (ET) um die nach außen vorstehende erste Vielzahl von laminierten Schichten (17'), um die nach außen vorstehende erste Vielzahl von laminierten Schichten (17') während eines Aushärtungsschritts in Position zu halten; wobei die äußere erste Elementformwerkzeuganordnung (ET) um komplementäre laminierte Schichten (CL) der zweiten Vielzahl von laminierten Schichten (17") angeordnet ist, von denen ein Teil auf die nach außen vorstehende erste Vielzahl von laminierten Schichten (17') aufgebracht ist; und
- Aushärten der hohlen lasttragenden Balkenstruktur (1) in einem einzigen Aushärtungsschritt; und
- Entfernen des inneren und des äußeren Formwerkzeugs (18', 18") von der hohlen lasttragenden Balkenstruktur (1).

2. Verfahren nach Anspruch 1, wobei das innere Formwerkzeug (18') eine erste und eine zweite Dornanordnung (T1, T2) umfasst.

3. Verfahren nach Anspruch 1 oder 2, wobei das Verfahren ferner Folgendes umfasst:
- Aufbringen einer luftdichten Hülle (41) um die hohle lasttragende Balkenstruktur;
- Absaugen von Luft aus der luftdichten Hülle (41) zum Halten der ersten und der zweiten Vielzahl von laminierten Schichten (17', 17") in Position während des Aushärtungsschrittes.

4. Verfahren nach einem der Ansprüche 1 bis 3, wobei das Verfahren ferner Folgendes umfasst:
- Bearbeiten der ausgehärteten ersten Vielzahl von laminierten Schichten (17'), die von der zweiten Vielzahl von laminierten Schichten (17") nach außen vorsteht, wobei ein Teil der ausgehärteten ersten Vielzahl von laminierten Schichten (17') in einem ersten Abschnitt (S1) zum Bilden eines äußeren ersten Elements (7') gehalten wird.

5. Verfahren nach einem der vorhergehenden Ansprüche, wobei das Verfahren ferner Folgendes umfasst:
- Aufbringen eines Befestigungselements (5) auf die erste Vielzahl von laminierten Schichten (17'), das von der zweiten Vielzahl von laminierten Schichten (17") nach außen vorsteht.

## Revendications

1. Procédé de fabrication d'une structure de poutre porteuse creuse (1) comprenant un matériau composite renforcé de fibres ; dans lequel la structure de poutre porteuse creuse (1) comprend une première pluralité de couches stratifiées (17') constituant une première poutre (9') formée par un outil de formage intérieur (18'), la structure de poutre porteuse creuse (1) comprend en outre une seconde pluralité de couches stratifiées (17") constituant un premier revêtement externe (3) ;
le procédé comprenant:
- le formage de la première poutre (9') au moyen de l'outil de formage intérieur (18') ;
- le formage du premier revêtement externe (3) au moyen d'un outil de formage extérieur (18") ;
moyennant à quoi la première pluralité de couches stratifiées (17') s'étend à travers la seconde pluralité de couches stratifiées (17") et fait saillie vers l'extérieur à partir de celle-ci ; **caractérisé en ce que** :
- avant l'étape d'application d'une enveloppe étanche à l'air autour de la structure de poutre porteuse creuse et des premier et second agencements de mandrins, le procédé comprend :
- le positionnement d'un premier élément externe formant un agencement d'outil (ET) autour de la première pluralité de couches stratifiées saillant vers l'extérieur (17') pour maintenir la première pluralité de couches stratifiées saillant vers l'extérieur (17') en position pendant une étape de durcissement ; dans lequel l'agencement d'outil de formage du premier élément externe (ET) est positionné autour de couches stratifiées complémentaires (CL) de la seconde pluralité de couches stratifiées (17"), dont une partie est appliquée sur la première pluralité de couches stratifiées faisant saillie vers l'extérieur (17') ; et
- le durcissement de la structure de poutre porteuse creuse (1) en une seule étape de durcissement ; et
- le retrait de l'outil de formage intérieur et extérieur (18', 18") de la structure de poutre porteuse creuse (1).

2. Procédé selon la revendication 1, dans lequel l'outil de formage intérieur (18') comprend un premier et un second agencement de mandrin (T1, T2).

3. Procédé selon la revendication 1 ou 2, dans lequel le procédé comprend en outre :
- l'application d'une enveloppe étanche à l'air (41) autour de la structure de poutre porteuse creuse ;
- l'évacuation de l'air de l'enveloppe étanche à l'air (41) pour maintenir la première et la seconde pluralité de couches stratifiées (17', 17") en position pendant l'étape de durcissement.

4. Procédé selon l'une quelconque des revendications 1 à 3, dans lequel le procédé comprend en outre :
- l'usinage de la première pluralité durcie de couches stratifiées (17') faisant saillie vers l'extérieur à partir de la seconde pluralité de couches stratifiées (17"), dans lequel une partie de la première pluralité durcie de couches stratifiées (17') est maintenue dans une première section (S1) pour former un premier élément externe (7').

5. Procédé selon l'une quelconque des revendications précédentes, dans lequel le procédé comprend en outre :
- l'application d'un élément de fixation (5) à la première pluralité de couches stratifiées (17'), faisant saillie vers l'extérieur à partir de la seconde pluralité de couches stratifiées (17").
